# EUROPÄISCHE PATENTSCHRIFT

(11) **EP 3 450 218 B1**
(45) Veröffentlichungstag und Bekanntmachung des Hinweises auf die Patenterteilung: **27.01.2021**
(21) Anmeldenummer: 18174468.1
(22) Anmeldetag: 28.05.2018
(51) Int. Cl.: B60C 13/02, B60C 15/024

(54) **FAHRZEUGLUFTREIFEN**
PNEUMATIC TYRES FOR A VEHICLE
PNEUMATIQUE DE VÉHICULE

(30) Priorität: 31.08.2017 DE 102017215267
(43) Veröffentlichungstag der Anmeldung: 06.03.2019
(73) Patentinhaber: Continental Reifen Deutschland GmbH, 30165 Hannover (DE)
(72) Erfinder: Andraczek, Gerald, 30823 Garbsen (DE); Brandau, Christian, 31542 Bad Nenndorf (DE); Arnold, Steffen, 31789 Hameln (DE); Muth, Joachim, 31556 Wölpinghausen (DE)
(74) Vertreter: Finger, Karsten

(56) Entgegenhaltungen:
- DE-T2- 69 914 958
- JP-A- S62 299 411
- US-A- 2 587 470

## Beschreibung

Die Erfindung betrifft einen Fahrzeugluftreifen mit Wulstbereichen, welche an ihren Außenseiten jeweils einen kreisringförmig umlaufenden Flächenbereich mit einer Schraffur aus einer Vielzahl von parallel zueinander oder annähernd parallel zueinander verlaufenden, insbesondere gleich gestalteten Erhebungen und Vertiefungen aufweisen, wobei sich der Flächenbereich, wenn der Reifen auf einer Felge montiert ist, zum Teil im Kontaktbereich zur Innenseite des Felgenhornes und zum Teil radial außerhalb des Kontaktbereiches befindet, wobei die Querschnittsfläche der Vertiefungen zwischen den Erhebungen höchstens 60% der Querschnittsfläche der Erhebungen entspricht und wobei die Erhebungen eine Höhe von 0,5 mm bis 1,2 mm aufweisen.

Es ist bekannt, dass es im Kontaktbereich von Reifen zu den Felgenhörnern der Felge beim Abrollen des Reifens zu Relativbewegungen und als Folge zu Reibungseffekten und Abrieberscheinungen am Reifen und am Felgenhorn kommen kann. Als Gegenmaßnahme zu solchen Abrieberscheinungen ist es bekannt, an den Außenseiten der Wulstbereiche jeweils einen kreisringförmig umlaufenden Flächenbereich mit einer Schraffur aus in radialer Richtung verlaufenden Erhebungen vorzusehen, die im Querschnitt als Dreiecke ausgestaltet sind, eine Höhe von etwa 0,4 mm und zwischen den Spitzen einander benachbarter Erhebungen einen Abstand von etwa 1,0 mm aufweisen. Dadurch beträgt die Querschnittsfläche der Vertiefungen mindestens das Doppelte der Querschnittsfläche der Erhebungen.

Ein Fahrzeugluftreifen eingangs genannter Art ist aus der JP S62 299411 A bekannt. Dieser Reifen ist ein Nutzfahrzeugreifen mit Wulstbereichen, deren Kontaktbereiche zu den Felgenhörnern der Felge mit Erhebungen, die unterschiedlich ausgestaltet sein können, versehen sind, um die Haltbarkeit der Wulstbereiche zu verbessern, insbesondere um einen vorzeitigen stärkeren Abrieb zu verhindern. Als Dimension der Erhebungen sind 2,0 mm erwähnt.

Bei den erwähnten Relativbewegungen können, unabhängig davon ob diese Schraffur vorgesehen ist oder nicht, schmatzende Geräusche entstehen, insbesondere bei niedriger Geschwindigkeit, bei Reifen mit steifen Seitenwänden, etwa Runflat-Reifen, oder bei Nässe, wenn Gummi und Felge im Kontaktbereich feucht werden. Besonders deutlich sind diese als unangenehm empfundenen Geräusche vor allem bei Fahrzeugen, die selbst kaum ein Geräusch verursachen, also beispielsweise Fahrzeuge die mit Elektromotoren betrieben werden. Im Fall der oben erwähnten bekannten Schraffur wird vermutet, dass sich die Erhebungen im Kontaktbereich zum Folgenhorn "verquetschen" und derart zum Entstehen des schmatzenden Geräusches beitragen.

Der Erfindung liegt somit die Aufgabe zugrunde, einen Fahrzeugluftreifen derart auszuführen, dass die in den Wulstbereichen zwischen dem Gummimaterial der Wulstbereiche und der Felge erzeugten schmatzenden Geräusche nicht mehr auftreten.

Gelöst wird die gestellte Aufgabe erfindungsgemäß dadurch, dass die Erhebungen einen dreieckigen, einen dreieckähnlichen oder einen insgesamt gerundeten, beispielsweise kuppelförmigen oder halbkreisförmigen, Querschnitt aufweisen.

Durch die Erfindung wird das Entstehen des störenden, schmatzenden Geräusches beim Abrollen des Reifens deutlich reduziert oder sogar verhindert. In erfindungsgemäß ausgeführten Schraffuren weisen die Erhebungen eine Mindesthöhe von 0,5 mm auf, die Vertiefungen zwischen den Erhebungen haben ein wesentlich kleineres Volumen als die Vertiefungen in der aus dem Stand der Technik bekannten Schraffur. Die Erhebungen sind daher in der Lage, sich in den Kontaktbereichen des Reifens zu den Felgenhörnern gut abstützen zu können, so dass beim Abrollen des Reifens eine derartige Aufnahme und Verteilung von Luft und, bei nassem Untergrund, von Wasser in den Vertiefungen erfolgt, dass das Entstehen des unerwünschten Geräusches zumindest weitgehend verhindert ist. Die Querschnittsformen der Erhebungen stellen die erwünschte stabilisierende Wirkung sicher.

Bei einer bevorzugten Ausführungsform beträgt die Querschnittsfläche der Vertiefungen zwischen den Erhebungen 40 % bis 60 % der Querschnittsfläche der Erhebungen, die Höhe der Erhebungen mindestens 0,6 mm. Die Erhebungen können sich daher besonders gut am Felgenhorn abstützen und es bleiben innerhalb der Vertiefungen ausreichend große Luftvolumina und Aufnahmevolumina für Wasser erhalten, die das Entstehen eines schmatzenden Geräusches sehr wirkungsvoll verhindern.

In diesem Zusammenhang ist es vorteilhaft, wenn der gegenseitige Abstand der Erhebungen, ermittelt zwischen den höchsten Stellen oder den Mitten der Plateaus von einander benachbarten Erhebungen, 1,3 mm bis 1,7 mm, insbesondere 1,5 mm, beträgt. Bei dreieckförmigen Erhebungen ist die stabilisierende Wirkung besonders gut, wenn die Erhebungen von seitlichen Schenkeln begrenzt sind, die einen Öffnungswinkel von 50° bis 70°, insbesondere von 55° bis 65°, einschließen.

Als besonders vorteilhaft für das Unterbinden des schmatzenden Geräusches hat sich herausgestellt, wenn die Erhebungen in radialer Richtung verlaufen.

Es sind jedoch auch andere Ausführungen des Schraffurbereiches dafür gut geeignet, das Entstehen des schmatzenden Geräusches zumindest weitgehend zu verhindern. Bei einer dieser Ausführungen verlaufen die Erhebungen über den Umfang des Wulstbereiches entlang von konzentrischen Kreisen. Bei einer weiteren, alternativen Ausführung setzt sich die Schraffur aus zwei einander kreuzenden Scharen von Erhebungen zusammen, wobei vorzugsweise der Kreuzungswinkel 90° beträgt und die Erhebungen unter einem Winkel von 45° zur radialen Richtung verlaufen.

Besonders ausgewogen lässt sich die Schraffur hinsichtlich der Querschnittsflächen der Erhebungen und Vertiefungen dann ausführen, wenn die Höhe der Erhebungen 0,7 mm bis 0,9 mm beträgt.

Auch die Breite des schraffierten Flächenbereiches spielt eine gewisse Rolle, um das Entstehen des schmatzenden Geräusches zu verhindern. Bevorzugt ist diesbezüglich eine Ausführung, bei der der schraffierte Flächenbereich eine Breite von 10 mm bis 25 mm, vorzugsweise von mindestens 12 mm und insbesondere von 15 mm bis 20 mm, aufweist, wobei, wenn der Reifen auf einer Felge montiert ist, der im Kontaktbereich zur Felge verlaufende Teil des Flächenbereiches und der den Kontaktbereich überragende Teil des Flächenbereiches jeweils eine Breite von mindestens 5 mm aufweisen.

Weitere Merkmale, Vorteile und Einzelheiten der Erfindung werden nun anhand der schematischen Zeichnung, die Ausführungsbeispiele darstellt, näher beschrieben. Dabei zeigen
Fig. 1 einen Wulstbereich eines Fahrzeugluftreifens mit angedeuteter Felge im Querschnitt,
Fig. 2 eine Draufsicht auf einen Umfangsabschnitt an einer der Seiten eines Fahrzeugluftreifens mit einer Ausführungsform einer Wulstschraffur,
Fig. 3 eine Schnittdarstellung entlang der Linie III-III der Fig. 2 und
Fig. 4 und Fig. 5 vergrößerte Ausschnitte von weiteren Ausführungsvarianten von Wulstschraffuren.

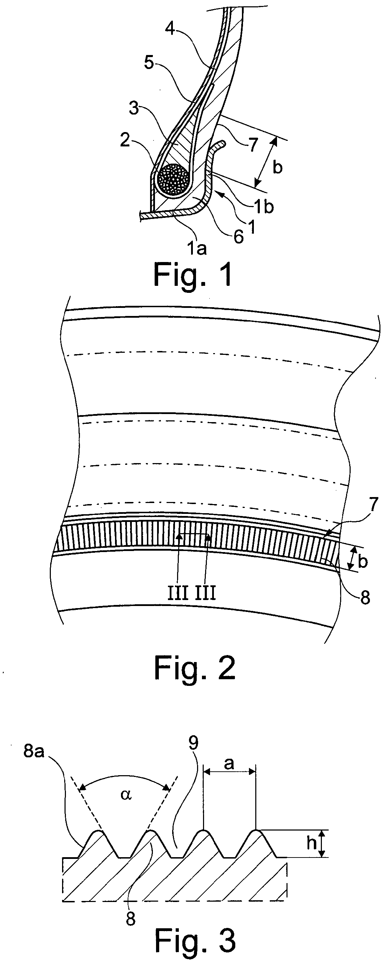

Fig. 1 zeigt schematisch einen Querschnitt durch den Wulstbereich eines Fahrzeugluftreifens, beispielsweise eines Reifens für Personenkraftwagen. Dargestellt sind ein Abschnitt einer Felge 1 mit einer Wulstsitzfläche 1a und einem Felgenhorn 1b, vom Fahrzeugluftreifen ein Wulstkern 2, ein Kernprofil 3 und ferner jener Abschnitt einer Radialkarkasse 4, welcher im Wulstbereich um den Wulstkern 2 und das Kernprofil 3 verläuft. Dargestellt sind ferner die im Bereich der Wulstzehe endende, aus einem Gummimaterial bestehende Innenschicht 5 sowie ein ebenfalls aus einem Gummimaterial bestehendes Hornprofil 6, welches mit der Felge 1 und somit auch mit dem Felgenhorn 1b in Kontakt ist.

An der Außenseite des Profils 6 ist im Kontaktbereich zum Felgenhorn lb kreisringförmig den Wulstbereich umlaufend ein mit einer Schraffur bedeckter Flächenbereich 7 ausgebildet. Der Flächenbereich 7 verläuft, wenn der Reifen auf einer Felge montiert ist, im Kontaktbereich zum Felgenhorn lb und überragt diesen Kontaktbereich in radialer

Richtung. Die Breite b des Flächenbereiches 7 ist über den Umfang des Wulstbereiches konstant und beträgt vorzugsweise mindestens 10 mm, besonders bevorzugt 12 mm bis 25 mm und insbesondere 15 mm bis 20 mm, wobei der im Kontaktbereich verlaufende Teil des Flächenbereiches 7 und der den Kontaktbereich überragende Teil des Flächenbereiches 7 jeweils eine Breite von mindestens 5 mm aufweisen. Die Schraffur im Flächenbereich 7 setzt sich aus einer Vielzahl von kleindimensionierten Erhebungen, wie im Einzelnen nachfolgend näher beschrieben wird, zusammen.

Bei der in Fig. 2 und 3 gezeigten Ausführung besteht die Schraffur aus einer Vielzahl von in radialer Richtung verlaufenden Erhebungen 8 und Vertiefungen 9. Die Erhebungen 8 sind im Querschnitt dreieckig oder dreieckähnlich und weisen eine Höhe h von 0,5 mm bis 1,2 mm, vorzugsweise mindestens 0,6 mm und insbesondere von 0,7 mm bis 0,9 mm, auf. Die Spitzen der Erhebungen 8 sind gerundet. Die Vertiefungen 9 sind von den Schenkeln 8a einander benachbarter Erhebungen 8 und einem zwischen diesen verlaufenden ebenen Boden begrenzt. Der Öffnungswinkel α zwischen den Schenkeln 8a benachbarter Erhebungen 8 beträgt 50° bis 70°, insbesondere 55° bis 65°. Der gegenseitige Abstand a der Spitzen einander benachbarter Erhebungen 8 beträgt 1,3 mm bis 1,7 mm, vorzugsweise 1,5 mm. Die Querschnittsfläche der Vertiefungen 9 beträgt höchstens 60 %, insbesondere 40 % bis 60 %, der Querschnittsfläche der Erhebungen 8, wobei die Querschnittsflächen zwischen zwei Einhüllenden - einer Einhüllenden entlang der Spitzen der Erhebungen und einer Einhüllenden entlang der Böden bzw. tiefsten Stellen der Vertiefungen - in der Schraffur ermittelt werden. Anstelle einer Dreieckform können die Erhebungen 8 im Querschnitt insgesamt gerundet, beispielsweise halbkreisförmig, ausgeführt sein. Bei einer weiteren, nicht erfindungsgemäßen Ausführung ist es möglich, die Erhebungen 8 rechteckig, insbesondere mit einer Breite von 0,6 mm bis 0,8 mm, auszugestalten. Der gegenseitige Abstand der Mitten der Plateaus der Erhebungen einander benachbarten Erhebungen beträgt auch bei dieser Variante 1,3 mm bis 1,7 mm.

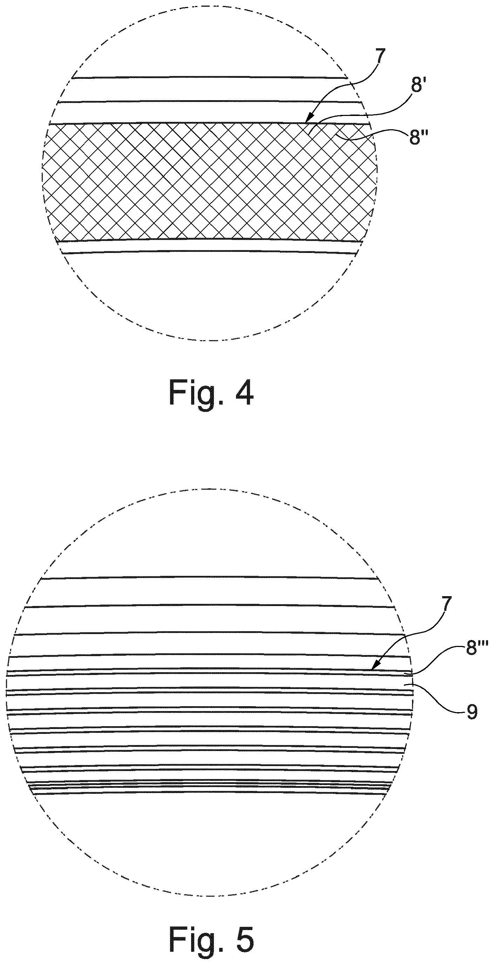

Bei der in Fig. 4 gezeigten Ausführung setzt sich der Flächenbereich 7 aus zwei einander kreuzenden Scharen von Erhebungen 8', 8" zusammen, wobei die Erhebungen 8', 8" in jeder Schar parallel zueinander verlaufen. Der Kreuzungswinkel beträgt vorzugsweise 90°, wobei die Erhebungen 8', 8" unter einem Winkel von 45° zur radialen Richtung verlaufen. Die Erhebungen 8', 8" bilden derart ein schräges Karomuster, welches sich in Draufsicht aus Rechtecken zusammensetzt. Die Erhebungen 8', 8" können die bereits beschriebenen Querschnittsformen mit den bereits erwähnten Abmessungen aufweisen.

Figur 5 zeigt eine dritte Ausführungsvariante der Erfindung, bei welcher sich der Flächenbereich 7 aus einer Anzahl von konzentrisch und über den Umfang des Wulstbereiches verlaufenden Erhebungen 8'" zusammensetzt. Die Ausgestaltung des Querschnittes der Erhebungen 8"', ihr gegenseitiger Abstand, und ihre Höhe entsprechen dem ersten Ausführungsbeispiel.

Erfindungsgemäß ausgeführte Fahrzeugluftreifen können auch Reifen für Zweiradfahrzeuge oder Nutzfahrzeugreifen sein. Die an den Wulstbereichen vorgesehenen Schraffuren verhindern zumindest weitgehend die beim Abrollen des Reifens durch die Relativbewegungen zwischen den Wulstbereichen und der Felge entstehenden schmatzenden Geräusche, welche insbesondere bei niedrigen Abrollgeschwindigkeiten, bei Feuchtigkeit bzw. Nässe und bei Reifen mit steifen Seitenwänden auftreten.

### Bezugszeichenliste

- 1: Felge
- 1a: Wulstsitzfläche
- 1b: Felgenhorn
- 2: Wulstkern
- 3: Kernprofil
- 4: Radialkarkasse
- 5: Innenschicht
- 6: Profil
- 7: Flächenbereich
- 8, 8', 8", 8': Erhebung
- 8a: Schenkel
- 9: Vertiefung
- α: Winkel
- a: Abstand
- b: Breite
- h: Höhe

## Patentansprüche

1. Fahrzeugluftreifen mit Wulstbereichen, welche an ihren Außenseiten jeweils einen kreisringförmig umlaufenden Flächenbereich (7) mit einer Schraffur aus einer Vielzahl von parallel zueinander oder annähernd parallel zueinander verlaufenden, insbesondere gleich gestalteten Erhebungen (8, 8', 8", 8"') und Vertiefungen (9) aufweisen, wobei sich der Flächenbereich (7), wenn der Reifen auf einer Felge (1) montiert ist, zum Teil im Kontaktbereich zur Innenseite des Felgenhornes (1b) und zum Teil radial außerhalb des Kontaktbereiches befindet, wobei die Querschnittsfläche der Vertiefungen (9) zwischen den Erhebungen (8, 8', 8", 8''') höchstens 60% der Querschnittsfläche der Erhebungen (8, 8', 8", 8"') entspricht und wobei die Erhebungen (8, 8', 8", 8"') eine Höhe (h) von 0,5 mm bis 1,2 mm aufweisen,
**dadurch gekennzeichnet,**
**dass** die Erhebungen (8, 8', 8", 8"') einen dreieckigen, einen dreieckähnlichen oder einen insgesamt gerundeten, beispielsweise halbkreisförmigen, Querschnitt aufweisen.

2. Fahrzeugluftreifen nach Anspruch 1, **dadurch gekennzeichnet, dass** die Querschnittsfläche der Vertiefungen (9) zwischen den Erhebungen (8, 8', 8", 8"') 40% bis 60% der Querschnittsfläche der Erhebungen (8, 8', 8", 8"') entspricht.

3. Fahrzeugluftreifen nach Anspruch 1 oder 2, **dadurch gekennzeichnet, dass** die Erhebungen (8, 8', 8", 8"') eine Höhe (h) von mindestens 0,6 mm aufweisen.

4. Fahrzeugluftreifen nach Anspruch 1 oder 2, **dadurch gekennzeichnet, dass** der gegenseitige Abstand (a) der Erhebungen (8, 8', 8", 8"'), ermittelt zwischen den höchsten Stellen oder den Mitten der Plateaus der Erhebungen (8, 8', 8", 8"'), 1,3 mm bis 1,7 mm, insbesondere 1,5 mm, beträgt.

5. Fahrzeugluftreifen nach einem der Ansprüche 1 bis 4, **dadurch gekennzeichnet, dass** die Vertiefungen (9) zwischen den Erhebungen (8, 8', 8", 8'") von seitlichen Schenkeln (8a) begrenzt sind, die einen Öffnungswinkel (a) von 50° bis 70°, insbesondere von 55° bis 65°, einschließen.

6. Fahrzeugluftreifen nach einem der Ansprüche 1 bis 5, **dadurch gekennzeichnet, dass** die Erhebungen (8) in radialer Richtung verlaufen.

7. Fahrzeugluftreifen nach einem der Ansprüche 1 bis 5, **dadurch gekennzeichnet, dass** die Erhebungen (8"') über den Umfang des Wulstbereiches entlang von konzentrischen Kreisen verlaufen.

8. Fahrzeugluftreifen nach einem der Ansprüche 1 bis 5, **dadurch gekennzeichnet, dass** sich die Schraffur aus zwei einander kreuzenden Scharen von Erhebungen (8', 8") zusammensetzt, wobei der Kreuzungswinkel vorzugsweise 90° beträgt und die Erhebungen (8', 8") vorzugsweise unter einem Winkel von 45° zur radialen Richtung verlaufen.

9. Fahrzeugluftreifen nach einem der Ansprüche 1 bis 8, **dadurch gekennzeichnet, dass** die Höhe (h) der Erhebungen (8, 8', 8") 0,7 mm bis 0,9 mm beträgt.

10. Fahrzeugluftreifen nach einem der Ansprüche 1 bis 9, **dadurch gekennzeichnet, dass** der Flächenbereich (7) eine Breite (b) von 10 mm bis 25 mm, vorzugsweise von mindestens 12 mm und insbesondere von 15 mm bis 20 mm, aufweist, wobei, wenn der Reifen auf einer Felge (1) montiert ist, der im Kontaktbereich zur Felge (1) verlaufende Teil des Flächenbereiches (7) und der den Kontaktbereich überragende Teil des Flächenbereiches (7) jeweils eine Breite von mindestens 5 mm aufweisen.

## Claims

1. Pneumatic vehicle tyre with bead regions, which have on their outer sides respectively a surface area (7), running around in the form of a circular ring, with a hatching comprising a multiplicity of, in particular identically shaped, elevations (8, 8', 8", 8"') and depressions (9) running parallel to one another or approximately parallel to one another, wherein, when the tyre is mounted on a rim (1), the surface area (7) is partly in the contact area with respect to the inner side of the rim flange (1b) and partly radially outside the contact area, wherein the cross-sectional area of the depressions (9) between the elevations (8, 8', 8", 8"') corresponds to at most 60% of the cross-sectional area of the elevations (8, 8', 8", 8"') and wherein the elevations (8, 8' , 8", 8"') have a height (h) of 0.5 mm to 1.2 mm,
**characterized**
**in that** the elevations (8, 8', 8", 8"') have a triangular, a triangle-like or an altogether rounded, for example semicircular, cross section.

2. Pneumatic vehicle tyre according to Claim 1, **characterized in that** the cross-sectional area of the depressions (9) between the elevations (8, 8', 8", 8"') corresponds to 40% to 60% of the cross-sectional area of the elevations (8, 8', 8", 8'").

3. Pneumatic vehicle tyre according to Claim 1 or 2, **characterized in that** the elevations (8, 8', 8", 8"') have a height (h) of at least 0.6 mm.

4. Pneumatic vehicle tyre according to 1 or 2, **characterized in that** the mutual spacing (a) of the elevations (8, 8', 8", 8"'), determined between the highest points or the middles of the plateaus of the elevations (8, 8', 8", 8"'), is 1.3 mm to 1.7 mm, in particular 1.5 mm.

5. Pneumatic vehicle tyre according to one of Claims 1 to 4, **characterized in that** the depressions (9) between the elevations (8, 8', 8", 8"') are delimited by lateral sides (8a), which enclose an opening angle (α) of 50° to 70°, in particular of 55° to 65°.

6. Pneumatic vehicle tyre according to one of Claims 1 to 5, **characterized in that** the elevations (8) run in the radial direction.

7. Pneumatic vehicle tyre according to one of Claims 1 to 5, **characterized in that** the elevations (8"') run along concentric circles over the circumference of the bead region.

8. Pneumatic vehicle tyre according to one of Claims 1 to 5, **characterized in that** the hatching is made up of two groups of elevations (8', 8") crossing one another, wherein the crossing angle is preferably 90° and the elevations (8', 8") preferably run at an angle of 45° in relation to the radial direction.

9. Pneumatic vehicle tyre according to one of Claims 1 to 8, **characterized in that** the height (h) of the elevations (8, 8', 8") is 0.7 mm to 0.9 mm.

10. Pneumatic vehicle tyre according to one of Claims 1 to 9, **characterized in that** the surface area (7) has a width (b) of 10 mm to 25 mm, preferably of at least 12 mm and in particular of 15 mm to 20 mm, wherein, when the tyre is mounted on a rim (1), the part of the surface area (7) being in the contact area with respect to the rim (1) and the part of the surface area (7) projecting above the contact area have each a width of at least 5 mm.

## Revendications

1. Pneumatique de véhicule comprenant des régions de talon qui présentent, au niveau de leurs côtés extérieurs, une région de surface respective périphérique de forme annulaire circulaire (7) avec un hachure constitué d'une pluralité de rehaussements (8, 8', 8", 8"') et de renfoncements (9) s'étendant parallèlement les uns aux autres ou approximativement parallèlement les uns aux autres, en particulier de configuration identique, la région de surface (7), lorsque le pneumatique est monté sur une jante (1), se trouvant en partie dans la région de contact avec le côté intérieur du rebord de jante (1b) et en partie radialement à l'extérieur de la région de contact, la surface en section transversale des renfoncements (9) entre les rehaussements (8, 8', 8", 8"') correspondant au maximum à 60 % de la surface en section transversale des rehaussements (8, 8', 8", 8"') et les rehaussements (8, 8', 8", 8"') présentant une hauteur (h) de 0,5 mm à 1,2 mm,
**caractérisé en ce que**
les rehaussements (8, 8', 8", 8"') présentent une section transversale triangulaire, approximativement triangulaire ou globalement arrondie, par exemple en forme de demi-cercle.

2. Pneumatique de véhicule selon la revendication 1, **caractérisé en ce que** la surface en section transversale des renfoncements (9) entre les rehaussements (8, 8', 8", 8"') correspond à 40 % à 60 % de la surface en section transversale des rehaussements (8, 8', 8", 8"').

3. Pneumatique de véhicule selon la revendication 1 ou 2, **caractérisé en ce que** les rehaussements (8, 8', 8", 8"') présentent une hauteur (h) d'au moins 0, 6 mm.

4. Pneumatique de véhicule selon la revendication 1 ou 2, **caractérisé en ce que** la distance (a) entre les rehaussements (8, 8', 8", 8"'), déterminée entre les points les plus hauts ou les centres du plateau des rehaussements (8, 8', 8", 8"'), mesure 1,3 mm à 1,7 mm, en particulier 1,5 mm.

5. Pneumatique de véhicule selon l'une quelconque des revendications 1 à 4, **caractérisé en ce que** les renfoncements (9) entre les rehaussements (8, 8', 8", 8"') sont limités par des branches latérales (8a) qui forment un angle d'ouverture (α) de 50° à 70°, en particulier de 55° à 65°.

6. Pneumatique de véhicule selon l'une quelconque des revendications 1 à 5, **caractérisé en ce que** les rehaussements (8) s'étendent dans la direction radiale.

7. Pneumatique de véhicule selon l'une quelconque des revendications 1 à 5, **caractérisé en ce que** les rehaussements (8"') s'étendent sur la périphérie de la région de talon le long de cercles concentriques.

8. Pneumatique de véhicule selon l'une quelconque des revendications 1 à 5, **caractérisé en ce que** le hachure est constitué de deux groupes de rehaussements (8', 8") s'intersectant, l'angle d'intersection étant de préférence de 90° et les rehaussements (8', 8") s'étendant de préférence suivant un angle de 45° par rapport à la direction radiale.

9. Pneumatique de véhicule selon l'une quelconque des revendications 1 à 8, **caractérisé en ce que** la hauteur (h) des rehaussements (8, 8', 8") mesure 0,7 mm à 0,9 mm.

10. Pneumatique de véhicule selon l'une quelconque des revendications 1 à 9, **caractérisé en ce que** la région de surface (7) présente une largeur (b) de 10 mm à 25 mm, de préférence d'au moins 12 mm et notamment de 15 mm à 20 mm, et lorsque le pneu est monté sur une jante (1), la partie de la région de surface (7) s'étendant dans la région de contact avec la jante (1) et la partie de la région de surface (7) s'étendant au-delà de la région de contact présentant chacune une largeur d'au moins 5 mm.
